Europäisches Patentamt

European Patent Office

Office européen des brevets

(11) Veröffentlichungsnummer: **0 187 346**
**B1**

(12) # EUROPÄISCHE PATENTSCHRIFT

(45) Veröffentlichungstag der Patentschrift:
16.08.89

(21) Anmeldenummer: 85116326.1

(22) Anmeldetag: 20.12.85

(51) Int. Cl.⁴: **B60R 21/04, B60R 11/02**

(54) Polsterkörper für den Innenraumbereich von Fahrzeugen.

(30) Priorität: 08.01.85  DE 3500392

(43) Veröffentlichungstag der Anmeldung:
16.07.86 Patentblatt 86/29

(45) Bekanntmachung des Hinweises auf die Patenterteilung:
16.08.89 Patentblatt 89/33

(84) Benannte Vertragsstaaten:
DE FR GB IT SE

(56) Entgegenhaltungen:
DE-A- 3 037 186
DE-U- 7 336 322
DE-U- 8 105 785
DE-U- 8 327 539
GB-A- 1 488 548
US-A- 2 560 009
US-A- 4 281 224

PATENT ABSTRACTS OF JAPAN, Band 8,
Nr. 100 (M-295)[1537], 11. Mai 1984; & JP - A
- 59 14542 (NISSAN) 25.01.1984

(73) Patentinhaber: Gebr. Happich GmbH,
Postfach 10 02 49 Clausenbrücke 1,
D-5600 Wuppertal 1(DE)

(72) Erfinder: Wolff, Martin, Felderbachstrasse 119 A,
D-4320 Hattingen(DE)

## Beschreibung

Die Erfindung bezieht sich auf einen Polsterkörper für den Innenraumbereich von Fahrzeugen, wie insbesondere eine Armlehne, eine Armaturentafel oder dgl., bestehend aus einer relativ formstabilen Einlage und einer von dieser getragenen Polsterschicht aus Schaumkunststoff, mit einer von der Vorderseite des Polsterkörpers her zugänglichen, sich etwa bis zur oberseitigen Auflagefläche desselben erstreckenden Öffnung zur Aufnahme eines Einbauteils, z.B. eines Lautsprechers und mit einem die Öffnung verschließenden Blendenkörper.

In Fahrzeugen herrscht im allgemeinen eine mehr oder weniger große räumliche Enge, was es oftmals erforderlich macht, auch Polsterkörper, wie z.B. Armlehnen, Armaturentafeln oder dgl. mit zusätzlichen Funktionsteilen, wie Aschenbechern, Luftdüsen, Lautsprechern oder dgl. mehr auszurüsten. Wenn, wie es bei Armaturentafeln im allgemeinen der Fall ist, genügend Fleisch für die Unterbringung von derartigen Funktionsteilen vorhanden ist, bestehen an sich keine Probleme, oder nur dann, wenn solche Funktionsteile an ungünstigen Positionen, in denen sie eine hier geforderte elastische Verformbarkeit behindern könnten, plaziert werden müssen. Beispielsweise bei Armlehnen wird eine weiche Ausgestaltung des Armauflagebereiches gefordert, was bei einer entsprechenden Belastung eine bestimmte elastische Verformbarkeit senkrecht zur Armauflage bedingt. Die Ausrüstung einer Armlehne mit einem starren Zusatzteil kann aber dazu führen, daß die Armlehne oder ein anderer Polsterkörper der geschilderten Funktionsanforderung nicht mehr genügt.

Es ist hiernach Aufgabe der vorliegenden Erfindung einen Polsterkörper und einen Blendenkörper der eingangs näher erwähnten Art so zu gestalten und aufeinander abzustimmen, daß die elastische Verformbarkeit des Polsterkörpers nicht, zumindest aber nicht wesentlich behindert wird und daß der Polsterkörper trotz des Vorhandenseins eines relativ starren Zusatzteils die allgemeinen Sicherheitsanforderungen erfüllt.

Zur Lösung dieser Aufgabe ist erfindungsgemäß vorgesehen, daß der Blendenkörper derart mit dem Polsterkörper verbunden ist, daß er sich in Richtung einer senkrecht auf die Auflagefläche des Polsterkörpers wirkenden Verformungskraft entsprechend dem Verformungsweg mitzubewegen vermag, wozu der Blendenkörper an der Rückseite zumindest einen, parallel zur Auflagefläche verlaufenden mit der auflageseitigen Polsterschicht verbundenen Haltezapfen sowie zumindest einen, in eine senkrecht zur Auflagefläche verlaufene Nut eingreifenden Führungszapfen aufweist.

Bevorzugterweise sind zwei als Klipse ausgebildete Haltezapfen und zwei als Klipse ausgebildete Führungszapfen vorgesehen, welch letztere mit nach außen gerichteten, einander abgewandten Rast- und Führungsansätzen in in den Seitenwandungen der Öffnung ausgebildeten Nuten eingreifen. Durch diese Maßnahmen ist sichergestellt, daß der Blendenkörper sowohl in Richtung der Verformungskraft als auch in Richtung der durch die elastische Verformung des Polsterkörpers hervorgerufenen Rückstellkraft mitbewegt wird und daß eine funktionsfeste Verbindung zwischen dem Polsterkörper und dem Blendenkörper vorliegt, bei der zufolge der angegebenen Verbindungselemente auch eine einfache Abstimmung bzw. Anpassung der zu fügenden Teile sowie ein Ausgleich möglicher Toleranzschwankungen erreicht worden ist.

Gemäß einer weiteren vorteilhaften Ausgestaltung der Erfindung weist der Blendenkörper einen oberen Winkelschenkel auf, der in eine muldenförmige Vertiefung der Auflagefläche eingreift und mit seiner Außenseite flächenbündig mit der Auflagefläche abschließt. Zwischen dem Winkelschenkel und dem bzw. den Haltezapfen ist dabei ein Einsteckkanal zur Aufnahme des zwischen der Öffnung und der muldenförmigen Vertiefung befindlichen Wandungsbereiches des Polsterkörpers ausgebildet. Obgleich sich hierdurch eine Verspannung des Wandungsbereiches im Einsteckkanal ergibt, ist weiterhin zwecks Erhöhung der Abzugssicherheit vorgesehen, daß der Wandungsbereich an der der Öffnung zugewandten Seite eine Nut zum Einrasten von an den Haltezapfen angeordneten Rastnasen aufweist.

Eine weitere vorteilhafte Ausgestaltung der Erfindung besteht darin, daß der Blendenkörper einen unteren, der Kontur des Polsterkörpers in versenkter Anordnung folgenden Winkelschenkel aufweist, der an der Auflagefläche, mit der der Polsterkörper an einer Befestigungswand anliegt, endet. Vorzugsweise befindet sich am freien Endbereich des unteren Winkelschenkels ein nach oben gerichteter, in eine randoffene Ausnehmung des Polsterkörpers eingreifender hakenförmiger Ansatz, dessen Außenseite bündig mit der Anlagefläche des Polsterkörpers abschließt.

Der besondere Vorteil der Erfindung wird in der einachsigen Nachgiebigkeit des vergleichsweise starren Blendenkörpers gegenüber dem im Auflagebereich weichen Polsterkörper und weiterhin darin gesehen, daß zwischen den Teilen eine zuverlässig feste Verbindung besteht, die allerdings im Bedarfsfalle, unter Zuhilfenahme eines Werkzeuges, durch Ausrasten der Klipse, auch wieder gelöst werden kann.

Ein bevorzugtes Ausführungsbeispiel der Erfindung wird im folgenden anhand der Zeichnung näher erläutert.

Es zeigen:

Fig. 1 einen als Armlehne mit Haltegriff ausgebildeten Polsterkörper,
Fig. 2 einen Schnitt II - II nach Fig. 1 und
Fig. 3 einen Schnitt III - III nach Fig. 2.

Der Polsterkörper besteht aus einer Armlehne 1 mit integriertem Haltegriff 2. Im einzelnen ist der Polsterkörper gebildet aus einer Einlage 3 und einer damit verbundenen Polsterschicht 4 aus Schaumkunststoff. Außenseitig ist der Polsterkörper mit einer Kunststoffhaut 5 versehen.

Die Armlehne 1 weist eine Auflagefläche 6, eine vordere Wandfläche 7 sowie eine Anlagefläche 8 auf. Im mittleren Armlehnenbereich ist eine von der vorderen Wandfläche 7 her zugängliche Öffnung 9 vorgesehen, welche zur Aufnahme eines Einbauteils, z.B. eines nicht dargestellten Lautsprechers dient. Diese Öffnung 9, die sich nach oben hin nahezu bis zur Auflagefläche 6 erstreckt, ist durch einen vorgesetzten Blendenkörper 10 verschlossen. Der Blendenkörper 10 besteht aus einem Steg 11, an den sich oberendig ein erster Winkelschenkel 12 und unterendig ein zweiter Winkelschenkel 13 jeweils einstückig anschließt. Damit weist der Blendenkörper 10 eine etwa U-förmige Querschnittsform auf. Der Winkelschenkel 12 greift in eine im Bereich der Auflagefläche 6 vorgesehene muldenförmige Vertiefung 14 ein, derart, daß er sich mit seiner Unterseite auf dem Boden der Vertiefung 14 abstützt und mit seiner Oberseite etwa bündig mit der Auflagefläche 6 abschließt. An der Rückseite des Blendenkörpers 10 sind zwei im Abstand nebeneinander angeordnete Haltezapfen 15 vorgesehen, die etwa parallel zum Winkelschenkel 12 ausgerichtet sind und die zusammen mit diesem einen Einsteckkanal 16 zur Aufnahme des zwischen der Öffnung 9 und der muldenförmigen Vertiefung 14 befindlichen Wandungsbereiches 17 bilden. An den freien Endbereichen der Haltezapfen 15 sind Rastnasen 18 zum Einklipsen in eine an der Unterseite des Wandungsbereiches 17 ausgebildeten Nut 19 oder dgl. angeformt.

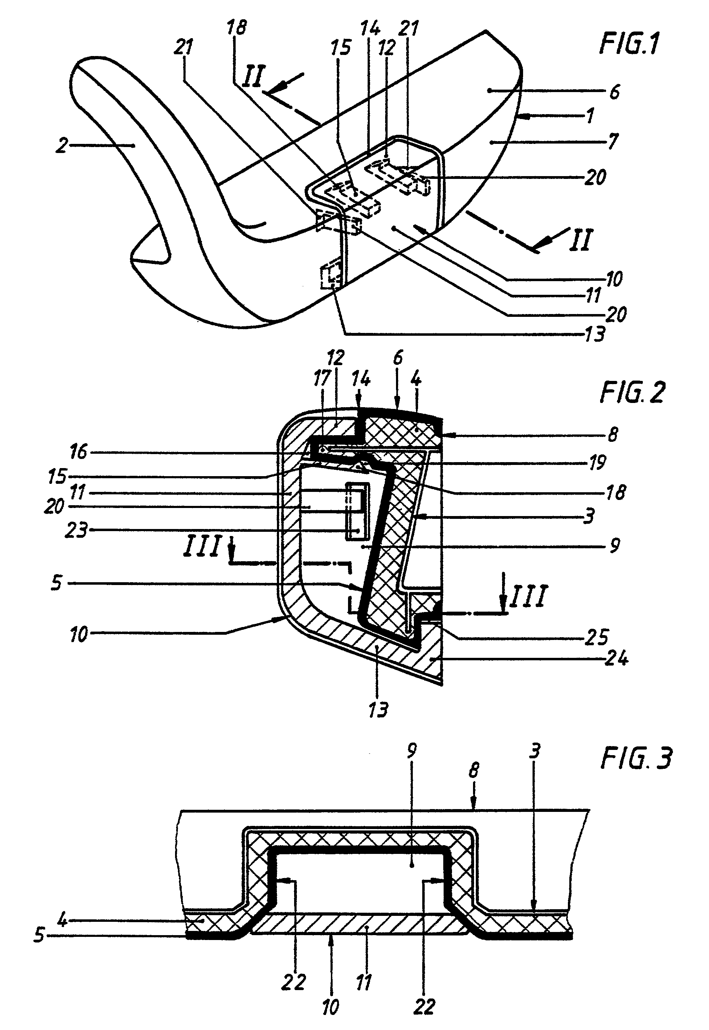

Weiterhin befinden sich an der Rückseite des Blendenkörpers 10 zwei jeweils als Klipse ausgebildete Führungszapfen 20, die mit nach außen gerichteten, einanderabgewandten Rast- und Führungsansätzen 21 (vgl. Fig. 1) in in den Seitenwandungen 22 der Öffnung 9 ausgebildeten Nuten 23 (vgl. Fig. 2) eingreifen.

Am freien Endbereich des unteren Winkelschenkels 13 ist ein nach oben gerichteter hakenförmiger Ansatz 24 angeordnet, dessen Außenseite bündig mit der Anlagefläche 8 abschließt oder gegenüber dieser geringfügig nach innen zurückspringt. Der hakenförmige Ansatz greift in eine randoffene Ausnehmung 25 an der Rückseite der Armlehne 1 ein.

Der Blendenkörper 10 besteht aus einem relativ starren, jedoch biegeelastische Eigenschaften aufweisenden Material und er ist bevorzugterweise als Kunststoffspritzgußteil ausgebildet.

Bei der Montage des Blendenkörpers 10 wird zunächst der hakenförmige Ansatz 24 in die Ausnehmung 25 gesteckt und anschließend wird der Blendenkörper 10 in die endgültige Lage, wie sie in den Fig. 1 bis 3 dargestellt ist, geschwenkt, wobei die Haltezapfen 15 und die Führungszapfen 20, wie beschrieben, einrasten. Die Haltezapfen 15 verspannen den Auflagebereich (Winkelschenkel 12) des Blendenkörpers 10 mit der Armlehne bzw. dem Wandungsbereich 17 und geben somit eine definierte Höhenposition des Blendenkörpers 10 zum Polsterkörper an. Die seitlichen Führungszapfen 20 liegen mit ihren Rast- und Führungsansätzen 21 in den nach unten deutlich verlängerten Nuten 23 und erzeugen eine definierte Breitenpositionierung des Blendenkörpers 10 zum Polsterkörper. Die Einhakposition (Ansatz 24) sowie die Klipspositionen der Haltezapfen 15 und Führungszapfen 20 sind so abgestimmt, daß die flankenseitige Auflage des Blendenkörpers 10 am Polsterkörper zwecks Toleranzausgleich immer aufliegt (Fig. 3).

Wenn nun senkrecht zur Auflagefläche 6 eine Verformungskraft aufgebracht wird, so verformt sich die Armlehne in diesem Bereich elastisch. Der Blendenkörper 10 wird dabei nach unten verschoben, und zwar auch in den am Schaumteil nicht verformten Bereichen, wobei eine durch die elastische Verformung hervorgerufene Rückstellkraft im Bereich des Schaumteils hervorgerufen wird, der zwischen den oberen Klipspositionen (Haltezapfen 15) und dem Auflagebereich des Blendenkörpers 10 verspannt ist. Das Verschieben des Blendenkörpers 10 wird ermöglicht durch die nach unten verlängerten seitlichen Rastnuten 23 sowie durch die aufnahmeseitige Führung der Einhakposition, die nach unten keinen Anschlag des Blendenkörpers vorsieht.

## Patentansprüche

1. Polsterkörper für den Innenraumbereich von Fahrzeugen, wie insbesondere eine Armlehne (1), eine Armaturentafel oder dgl., bestehend aus einer relativ formstabilen Einlage (3) und einer von dieser getragenen Polsterschicht (4) aus Schaumkunststoff, mit einer von der Vorderseite des Polsterkörpers her zugänglichen, sich etwa bis zur oberseitigen Auflagefläche (6) desselben erstreckenden Öffnung (9) zur Aufnahme eines Einbauteils, z.B. eines Lautsprechers und mit einem die Öffnung (9) verschließenden Blendenkörper (10), dadurch gekennzeichnet, daß der Blendenkörper (10) derart mit dem Polsterkörper verbunden ist, daß er sich in Richtung einer senkrecht auf die Auflagefläche des Polsterkörpers wirkenden Verformungskraft entsprechend dem Verformungsweg mitzubewegen vermag, wozu der Blendenkörper (10) an der Rückseite zumindest einen, parallel zur Auflagefläche (6) verlaufenden mit der auflageseitigen Polsterschicht (4) verbundenen Haltezapfen (15) sowie zumindest einen, in eine senkrecht zur Auflagefläche (6) verlaufende Nut (23) eingreifenden Führungszapfen (20) aufweist.

2. Polsterkörper nach Anspruch 1, dadurch gekennzeichnet, daß zwei als Klipse ausgebildete Haltezapfen (15) und zwei als Klipse ausgebildete Führungszapfen (20) vorgesehen sind, welch letztere mit nach außen gerichteten einanderabgewandten Rast- und Führungsansätzen (21) in in den Seitenwandungen (22) der Öffnung (9) ausgebildeten Nuten (23) eingreifen.

3. Polsterkörper nach Anspruch 1 oder 2, dadurch gekennzeichnet, daß der Blendenkörper (10) einen oberen Winkelschenkel (12) aufweist, der in eine muldenförmige Vertiefung (14) der Auflagefläche (6) eingreift und mit seiner Außenseite flächenbündig mit der Auflagefläche (6) abschließt.

4. Polsterkörper nach einem oder mehreren der Ansprüche 1 bis 3, dadurch gekennzeichnet, daß zwischen dem Winkelschenkel (12) und dem bzw. den Haltezapfen (15) ein Einsteckkanal (16) zur Aufnahme des zwischen der Öffnung (9) und der muldenförmigen Vertiefung (14) befindlichen Wandungsbereiches (17) des Polsterkörpers ausgebildet ist.

5. Polsterkörper nach Anspruch 4, dadurch gekennzeichnet, daß der Wandungsbereich (17) an der der Öffnung (9) zugewandten Seite eine Nut (19) zum Einrasten von an den Haltezapfen (15) angeordneten Rastnasen (18) aufweist.

6. Polsterkörper nach einem oder mehreren der Ansprüche 1 bis 5, dadurch gekennzeichnet, daß der Blendenkörper (10) einen unteren, der Kontur des Polsterkörpers in versenkter Anordnung folgenden Winkelschenkel (13) aufweist, der an der Anlagefläche (8), mit der der Polsterkörper an einer Befestigungswand anliegt, endet.

7. Polsterkörper nach Anspruch 6, dadurch gekennzeichnet, daß sich am freien Endbereich des unteren Winkelschenkels (13) ein nach oben gerichteter, in eine randoffene Ausnehmung (25) des Polsterkörpers eingreifender hakenförmiger Ansatz (24) befindet, dessen Außenseite etwa bündig mit der Anlagefläche (8) des Polsterkörpers abschließt.

## Claims

1. A padded body – for the interior of a vehicle – especially an armrest (1), a dashboard or the like, comprising a relatively inherently stable insert (3) and, supported thereby, a padded layer (4) of a foamed plastics material, wherein the padded body has an opening (9), which is accessible from the body's front which extends substantially to the body's top support surface (6) and which serves to accommodate a built-in accessory – for example a loudspeaker – and also has a shield (10) occluding the opening (9), characterized in that the shield (10) is connected to the padded body in such a way that, if the support surface of the padded body as a result of a deformative force perpendicularly exerted thereon is deformed, it is capable of co-moving in conformity with the deformation path, and in that for this purpose the shield's (10) rear is provided with at least one holding spigot (15) which extends parallel with the support surface (6) and is connected to the padded layer (4) in the region of the support surface, and with at least one guide spigot (20) engaging a groove (23) extending perpendicularly to the support surface (6).

2. A padded body according to claim 1, characterised in that the shield is provided with two holding spigots (15) and two guide spigots (20) each of which is constructed as a clip, and in that the guide spigots include outwardly extending oppositely directed snap-in and guide tongues (21) each of which engages a respective one of two grooves (23) – one formed in each of the side walls (22) of the opening (9).

3. A padded body according to claim 1 or claim 2, characterized in that the shield (10) is provided with an upper angled arm (12) which engages a trough-shaped indentation (14) of the support surface (6) and the top face of which is flush with the support surface (6).

4. A padded body according to any one of more of the claims 1 to 3, characterized in that a channel (16) is formed between the angled arm (12) and the holding spigot, or spigots (15), and in that a wall section (17) of the padded body disposed between the opening (9) and the trough-shaped indentation (14) is insertable into the channel.

5. A padded body according to claim 4, characterized in that the wall section (17) is provided at its side facing the opening (9) with a notch (19) for engaging a detent (18) arranged on the, or each, holding spigot (15).

6. A padded body according to any one of more of the claims 1 to 5, characterized in that the shield (10) is provided with a lower angled arm (13) which, when the padded body is depressed, conforms to the contour of the padded body and which terminates at the padded body's abutting face (8) arranged to abut on a mounting wall.

7. A padded body according to claim 6, characterized in that the free end portion of the lower angled arm (13) has an upwardly directed hook-shaped extension (24), which engages a peripherally open recess (25) in the padded body and the end face of which is substantially flush with the abutting face (8) of the padded body.

## Revendications

1. Corps rembourré pour l'intérieur de véhicules, comme en particulier pour un accoudoir (1), un tableau de bord ou similaire, se composant d'un insert (3) de forme stable et d'une couche rembourrée (4) en matière plastique mousse portée par celui-ci, avec une ouverture (9) accessible depuis le côté avant du corps rembourré, s'étendant approximativement jusqu'à la face d'appui (6) côté supérieure de celui-ci, pour recevoir une partie à monter, par exemple un haut-parleur et avec un corps d'obturation (10) obturant l'ouverture (9), caractérisé en ce que le corps d'obturation (10) est relié au corps rembourré de façon à permettre d'accompagner la course de déformation correspondant à une force de déformation agissant perpendiculairement sur la face d'appui du corps rembourré, ce pourquoi le corps d'obturation (10) présente sur le côté arrière au moins un téton de maintien (15), se développant parallèlement à la face d'appui (6), relié à la couche rembourrée (4) située côté appui, ainsi qu'au moins un téton de guidage (20) venant en prise dans une gorge (23) se développant perpendiculairement à la face d'appui (6).

2. Corps rembourré selon la revendication 1, caractérisé en ce que sont prévus deux tétons de maintien (15) réalisés sous forme de clips et deux tétons de guidage (20) réalisés sous forme de clips, le dernier de ceux-ci venant en prise avec des appendices d'encliquetage et de guidage (21) orientés vers l'extérieur, opposés les uns aux autres, dans les gorges (23) réalisées dans les parois latérales (22) de l'ouverture (9).

3. Corps rembourré selon la revendication 1 ou 2, caractérisé en ce que le corps d'obturation (10) présente un côté d'angle (12) supérieur venant en prise dans une cavité (14) en forme d'auge de la face d'appui (6) et se raccordant affleuré avec sa face extérieure, sur la face d'appui (6).

4. Corps rembourré selon l'une ou plusieurs des revendications 1 à 3, caractérisé en ce qu'un canal d'enfichage (16) pour recevoir la zone de paroi (17) du corps rembourré se trouvant entre l'ouverture (9) et la cavité (14) en forme d'auge est réalisé entre le côté d'angle (12) et le, ou les téton(s) de maintien (15).

5. Corps rembourré selon la revendication 4, caractérisé en ce que, sur le côté tourné vers l'ouverture (9), la zone de paroi (17) présente une gorge (19) pour encliqueter des ergots d'encliquetage (18) disposés sur les tétons de maintien (15).

6. Corps rembourré selon l'une ou plusieurs des revendications 1 à 5, caractérisé en ce que le corps d'obturation (10) présente un côté d'angle (13) inférieur, suivant dans un agencement raccordé le contour du corps rembourré, terminant sur la face d'appui (8) avec laquelle le corps rembourré appuie sur une paroi de fixation.

7. Corps rembourré selon la revendication 6, caractérisé en ce qu'un appendice (24) en forme de crochet, orienté vers le haut, venant en prise dans un évidement (25) à bordure ouverte du corps rembourré, se trouve sur la zone d'extrémité libre du côté d'angle (13) inférieur, appendice dont le côté extérieur se raccorde de manière approximativement affleurée à la face d'appui (8) du corps rembourré (8).

EP 0 187 346 B1

FIG.1

FIG.2

FIG.3